# NEUE EUROPÄISCHE PATENTSCHRIFT

(11) **EP 1 405 020 B2**
(45) Veröffentlichungstag und Bekanntmachung des Hinweises auf die Entscheidung über den Einspruch: **09.12.2009**
(45) Hinweis auf die Patenterteilung: 27.09.2006
(21) Anmeldenummer: 02748610.9
(22) Anmeldetag: 04.07.2002
(51) Int. Cl.: F28C 3/12, F25D 3/11, B65B 1/00

(54) **VERFAHREN ZUR DIREKTEN KÜHLUNG VON FEINTEILIGEN FESTSTOFFEN**
METHOD FOR DIRECTLY COOLING FINE-PARTICLE SOLID SUBSTANCES
PROCEDE DE REFROIDISSEMENT DIRECT DE SOLIDES EN FINES PARTICULES

(30) Priorität: 05.07.2001 DE 10132072; 05.07.2001 DE 10132073
(43) Veröffentlichungstag der Anmeldung: 07.04.2004
(73) Patentinhaber: Tronox Pigments International GmbH, 8001 Zürich (CH)
(72) Erfinder: WEBER, Dirk, 47495 Rheinberg (DE); SCHUY, Werner, 47918 Tönisvorst (DE); WITTEKOPF, Frank, 47918 Tönisvorst (DE); AUER, Gerhard, 47800 Krefeld (DE)
(74) Vertreter: Bergmann, Michael
(86) Internationale Anmeldenummer: PCT/DE2002/002447
(87) Internationale Veröffentlichungsnummer: WO 2003/004954

(56) Entgegenhaltungen:
- DE-A- 1 601 147
- DE-A- 3 713 571
- DE-A- 19 536 657
- DE-C- 3 941 262
- DE-C- 4 010 045
- FR-A- 2 125 151
- GB-A- 592 002
- US-A- 3 330 046
- US-A- 4 479 362
- US-A- 4 619 113
- US-A- 5 522 152
- PATENT ABSTRACTS OF JAPAN vol. 015, no. 467 (C-0888), 27. November 1991 (1991-11-27) & JP 03 199272 A (ASAHI CARBON KK), 30. August 1991 (1991-08-30)

## Beschreibung

Die Erfindung bezieht sich auf ein Verfahren zur direkten Kühlung von feinteiligen, pulverförmigen Feststoffen vor einer Abfüllung in Schüttgutverpackungen gemäß dem Oberbegriff von Anspruch 1, bekannt aus US-A-4 619 113. Die Erfindung bezieht sich außerdem auf eine Vorrichtung zur Durchführung eines derartigen Verfahrens.

Zahlreiche feinteilige, pulverförmige Feststoffe werden zum Zwecke des Verkaufs, des Transports, des Schutzes vor Umwelteinflüssen oder zum Zwecke der Lagerung in Schüttgutverpackungen abgefüllt. Häufig ist die Temperatur der feinteiligen, pulverförmigen Feststoffe aufgrund der Herstellungs- oder Verarbeitungsprozesse zu hoch für eine problemlose Abfüllung in die gewünschten Schüttgutverpackungen. Ohne ausreichende Kühlung kann dies deshalb zu zahlreichen Problemen oder Nachteilen führen, wie z.B.
- starker Verschleiß von temperaturempfindlichen Anlageteilen wie z.B. Gummidichtungen oder Quetschventile.
- Beschädigungen von Schüttgutverpackungen, wie z.B. Papier- oder Kunststoffsäcken, durch zu hohe Temperatur der Feststoffe
- niedriges Schüttgewicht der Feststoffe zum Zeitpunkt der Abfüllung
- schlechtes Entlüftungsverhalten bei der Befüllung von Schüttgutverpackungen und Silofahrzeugen aufgrund der vergleichsweise hohen Viskosität der heißen Gasphase
- niedrige Füllmenge von Schüttgutverpackungen und Silofahrzeugen
- zeitaufwändigere Befüllung von Schüttgutverpackungen und Silofahrzeugen
- Beschädigungen von Schüttgutverpackungen (z.B. Papiersäcke) durch zu hohes Füllvolumen
- starke Staubneigung bei der Abfüllung der Feststoffe in Schüttgutverpackungen
- optisch wenig ansprechendes Erscheinungsbild von Säcken und Paletten
- Kondensationseffekte innerhalb von Paletten mit Schrumpfhaube
- durch heiße Oberfläche der Schüttgutverpackungen Beeinträchtigung der Arbeitssicherheit bei der weiteren Handhabung (z.B. Verladung oder Transport)

Die genannten Probleme oder Nachteile bei der Abfüllung von feinteiligen, pulverförmigen Feststoffen in Schüttgutverpackungen können dabei sowohl einzeln als auch in Kombination auftreten. Einige der genannten Probleme oder Nachteile sind dabei naheliegend, wenn heiße Feststoffe gehandhabt und in Schüttgutverpackungen abgefüllt werden müssen, andere der genannten Probleme oder Nachteile (z.B. niedriges Schüttgewicht, schlechtes Entlüftungsverhalten) sind jedoch spezifisch für die Handhabung und Abfüllung von sehr feinteiligen, heißen, pulverförmigen Feststoffen in Schüttgutverpackungen. In diesem Sinne werden in der vorliegenden Druckschrift solche pulverförmigen Feststoffe als feinteilig bezeichnet, welche eine mittlere Teilchengröße von weniger als 50 µm, bevorzugt weniger als 20 µm aufweisen, insbesondere aber solche Feststoffe, welche eine mittlere Teilchengröße von weniger als 5 µm, bevorzugt weniger als 1 µm, aufweisen.
Unter Schüttgutverpackungen werden in der vorliegenden Druckschrift solche Verpackungen verstanden, welche zum Zwecke des Verkaufs, des Transports, des Schutzes vor Umwelteinflüssen oder zum Zwecke der dauerhaften Lagerung eingesetzt werden, beispielsweise Papier- oder Kunststoffsäcke, Fässer, Big Bags, Beutel, Behälter aus Papier, Pappe, Kunststoff oder anderen Werkstoffen.

Grundsätzlich können derartige Probleme bei der Abfüllung in Schüttgutverpackungen bei allen feinteiligen, pulverförmigen Feststoffen auftreten, welche durch Art der Herstellung oder Verarbeitung eine höhere Temperatur aufweisen, z.B. nach einer Kalzinierung, einer Kalzinierung mit anschließender Mahlung, einer Trocknung, einer sonstigen Hochtemperaturbehandlung oder bei einem Herstellverfahren bei hoher Temperatur.
Beispielsweise trifft dies zu auf Zement, Ruße oder auf thermisch, z.B. durch Kalzinieren, vorbehandelte Pigmente; die in Schüttgutverpackungen abgefüllt werden sollen. In besonderer Weise aber trifft dies zu auf dampfstrahlgemahlene Pigmente.

Für die Mahlung sehr feinteiliger Feststoffe mit Partikelgrößen im Bereich von 1 µm oder darunter wird häufig die Technik der Strahlmahlung verwendet. Bei der Strahlmahlung handelt es sich um eine Prallmahlung, bei der das Mahlgut in einem schnellen Gasstrom beschleunigt und durch Prall gegeneinander oder gegen eine Prallwand zerkleinert wird. Der Mahleffekt hängt dabei entscheidend von Stoßgeschwindigkeit bzw. Stoßenergie ab.
Bei der Mahlung von Feststoffen, für deren Zerkleinerung bzw. Desagglomerierung ein besonders hoher Energieeintrag oder ein besonders hoher Zerteilungsgrad benötigt wird, wie z.B. für verschiedene anorganische Pigmente, wird üblicherweise das Verfahren der Dampfstrahlmahlung mit überhitztem Dampf als Mahlmedium verwendet. Ein Verfahren zur Herstellung von Titandioxidpigmenten, bei dem das Titandioxid abschließend einer Dampfstrahlmahlung unterzogen wird, wird in DE 195 36 657 A1 beschrieben.

Bei einer Dampfstrahlmahlung liegt die Temperatur des Pigment-Gas-Gemisches nach Verlassen der Mühle meist im Bereich von ca. 200 bis 300°C. Nach Abscheidung des Pigments vom Wasserdampf mittels Zyklon oder Staubfilter liegt die Temperatur der wasserdampfhaltigen Pigmentschüttung typischerweise noch im Bereich von ca. 200 bis 250°C. Durch Zwischenlagerung in Silos oder bei der mechanischen oder pneumatischen Förderung tritt zwar noch eine gewisse Abkühlung ein, jedoch weisen die Pigmente zum Zeitpunkt des Befüllens von Säcken oder anderen Verpackungen häufig noch Temperaturen von rund 100°C oder mehr auf. Dies kann zu zahlreichen Problemen oder Nachteilen führen wie bereits oben beschrieben.

Der Kühleffekt von feinteiligen, pulverförmigen Feststoffen durch die Zugabe von Luft von Umgebungstemperatur, z.B. bei einer pneumatischen Förderung der feinteiligen, pulverförmigen Feststoffe, ist aufgrund der geringen Temperaturdifferenz und der geringen Wärmekapazität der Luft begrenzt. Daraus resultiert, dass selbst bei Verwendung von großen Luftmengen die Temperaturabsenkung vergleichsweise gering ist und demzufolge die oben beschriebenen Nachteile nur unwesentlich abgemildert werden.
Eine sehr große Menge an Luft kann zwar eine signifikante Temperaturabsenkung bewirken, jedoch weist diese Vorgehensweise erhebliche Nachteile bezüglich Abtrennung der Gasphase von den feinteiligen, pulverförmigen Feststoffen sowie bezüglich Abfülleigenschaften und Betriebskosten auf. Zudem steigt die Gefahr einer Kontamination der feinteiligen, pulverförmigen Feststoffe durch Feuchtigkeit, Staub, Kohlendioxid, Schwefel- oder Stickoxide, Ölspuren oder andere Verunreinigungen aus der Luft.

Konvektionskühlung über einen längeren Zeitraum ist ebenfalls nachteilig wegen der schlechten Wärmeleitfähigkeit der meisten feinteiligen, pulverförmigen Feststoffe und demzufolge einer unverhältnismäßig langen Blockierung von Schüttgutbehältern. Dies kann zu einer signifikanten Verringerung der Produktionskapazität führen.

In DE 3 414 035 A1 ist das indirekte Kühlen eines staubhaltigen Gases beschrieben, bei dem das Gas über mit einer Wärmespeichermasse gefüllte Regeneratoren geleitet wird.
Diese oder vergleichbare Verfahren zur indirekten Kühlung durch Kühlflächen oder Wärmetauscher sind wenig zweckmäßig, da hierfür erhebliche Wärmeübergangsflächen bereitgestellt werden müssten. Bei diesem in DE 3 414 035 A1 beschriebenen Verfahren ist zudem die Staubbeladung der Gase mit ca. 20 mg/m³ sehr gering und nicht vergleichbar mit den z.B. in der Pigmenttechnik üblichen Feststoff-Gas-Mischungsverhältnissen bei der beabsichtigten Abfüllung in Schüttgutverpackungen (häufig mehrere kg/m³). Erfahrungsgemäß steigt bei höheren Feststoffgehalten in der Gasphase die Gefahr von Anbackungen an den kühlenden Kontaktflächen.
Die Verwendung von Kühlschnecken zur indirekten Kühlung von feinteiligen, pulverförmigen Feststoffen findet verschiedentlich Anwendung, jedoch sind auch hier die Nachteile bezüglich Anbackungen, Betriebssicherheit und Investitionskosten erheblich.

In DE 3713571 A1 wird eine Vorrichtung zum Befüllen von Kunststoffsäcken mit pulverförmigen oder granulierten Materialien beschrieben, wobei die befüllten Säcke verschweißt und in eine Kühlzone gebracht werden, um die Stabilität der Schweißnaht zu gewährleisten.
Da die hier beschriebene Kühlung erst nach der Befüllung in Säcke vorgenommen wird, ist sie nicht geeignet, die oben genannten Nachteile zu vermeiden.

In US 3664385 wird ein mechanisches Verdichten von Pulvern für die Befüllung von Verpackungen beschrieben, wobei zum Entstauben auch ein Impuls von gekühlter Luft verwendet werden kann.
Der Kühleffekt eines solchen Impulses von gekühlter Luft ist jedoch nicht ausreichend, um eine hinreichende Verdichtung von feinteiligen, pulverförmigen Feststoffen zu erreichen, weshalb die Pulver noch zusätzlich mechanisch verdichtet werden müssen . Daneben ist dieses Verfahren für feinteilige, pulverförmige Feststoffe mit besonderen Anforderungen bezüglich Dispergierbarkeit und Feinteiligkeit, wie z.B. Pigmente, weniger geeignet, da durch das mechanische Verdichten die Gefahr einer Agglomeration besteht und dadurch der durch eine Mahlung beabsichtigte Zweck wieder teilweise eliminiert werden kann.

In US 4619113 wird eine direkte Kühlung von Waschpulver in einem Silo mit Hilfe von flüssigem Stickstoff beschrieben, um anschließend die Zugabe temperaturempfindlicher Waschpulveradditive ermöglichen zu können.
Da die mittlere Teilchengröße des zu kühlenden Waschpulvers 500 µm beträgt (Spalte 1, Zeilen 24-25), liefert dieses in US 4619113 beschriebene Verfahren weder einen Hinweis auf die besonderen Probleme bei der Abfüllung von sehr feinteiligen, pulverförmigen Feststoffen in Schüttgutverpackungen noch auf deren Lösung.

In DE 3941262 wird eine direkte Kühlung einer pulverförmigen Substanz mit Hilfe von flüssigem Stickstoff beschrieben, wobei der Pulverstrahl vor dem Kontakt mit dem flüssigen Stickstoff durch mechanische Einbauten zerstreut wird.
In DE 3623724 A1 wird eine direkte Kühlung von Zement mit Hilfe von flüssigem Stickstoff beschrieben, wobei der Zement gleichzeitig mit dem flüssigen Stickstoff in ein Zementsilo eingeblasen wird.
Diese in DE 3941262 und DE 3623724 A1 beschriebenen Verfahren bezwecken ausschließlich eine einfache Abkühlung, nicht aber eine Verbesserung der Abfülleigenschaften für die Abpackung in Schüttgutverpackungen. Diese Druckschriften geben weder Hinweise auf die spezifischen Anforderungen von sehr feinteilgen pulverförmigen Feststoffen noch Hinweise auf die oben genannten spezifischen Probleme und deren Lösung bei der Handhabung und Abfüllung von feinteiligen, pulverförmigen Feststoffen in Schüttgutverpackungen.

In US 3330046 wird der Wärmeaustausch zwischen Gasen und feinteiligen Feststoffen mit einer Teilchengröße von weniger als 50 µm beschrieben, wobei eine Vorrichtung bestehend aus mehreren miteinander verbundenen Kammern verwendet wird, durch welche der Gas- und Feststoff strom in Gegenrichtung erfolgt.
Die hierfür verwendete Anlage ist aufwändig und es wird eine große Menge an Kühlgas benötigt. Das Verfahren weist demzufolge ähnliche Nachteile wie bei der oben beschriebenen Kühlung mit großen Luftmengen auf. Es finden sich auch keine Hinweise auf die oben genannten spezifischen Probleme und deren Lösung bei der Handhabung und Abfüllung von feinteiligen, pulverförmigen Feststoffen in Schüttgutverpackungen.

In EP 611 928 A1, EP 501 495 A1 und DE 38 33 830 A1 wird eine direkte Kühlung von Mahlgut mit niedrig siedenden, kondensierten Gasen beschrieben. Diese Kühlung erfolgt jedoch vor der Mahlung zur Optimierung des eigentlichen Mahlprozesses durch Erhöhung der Sprödigkeit des Mahlguts und führt demnach nicht zu einer Lösung der oben beschriebenen Probleme.
Die durch derartige Kühlung erreichte Temperaturabsenkung vor der Mahlung geht in der Regel durch die mit der Mahlung verbundene Wärmeentwicklung wieder verloren, so dass keine Vorteile bei Abfüllung mehr bestehen.
Es finden sich auch keine Hinweise auf die oben genannten spezifischen Probleme und deren Lösung bei der Handhabung und Abfüllung von feinteiligen, pulverförmigen Feststoffen in Schüttgutverpackungen.

Die meisten der genannten Verfahren zielen darauf ab, durch unterschiedliche Varianten einer Kühlung offensichtliche thermische Folgeprobleme zu mindern. Explizite Hinweise auf die spezifischen Anforderung von feinteiligen, pulverförmigen Feststoffen, z.B. die sehr hohen Anforderungen hinsichtlich Feinteiligkeit und Dispergierbarkeit von Pigmenten, und die damit verbundenen Probleme bei der Abfüllung in Schüttgutverpackungen finden sich jedoch nicht.
Nachteilig bei den genannten Verfahren ist deshalb, dass sie die beschriebenen Probleme bei der Handhabung und Abfüllung von feinteiligen, pulverförmigen Feststoffen in Schüttgutverpackungen nicht oder nur zu einem geringen Teil beseitigen. Dies gilt in besonderem Maße für die beschriebenen pigmentspezifischen Probleme.

Aufgabe war es, ein Verfahren zur Verfügung zu stellen, welches es ermöglicht, einen heißen, feinteiligen, pulverförmigen Feststoff auf eine solche Weise zu behandeln, dass dabei die oben beschriebenen Nachteile bei der der Handhabung der feinteiligen, pulverförmigen Feststoffe und bei der anschließenden Abfüllung in Schüttgutverpackungen ganz oder zumindest weitgehend vermieden werden.
Aufgabe war es weiterhin, bei der Handhabung der feinteiligen, pulverförmigen Feststoffe und der Abfüllung in Schüttgutverpackungen ein möglichst geringes Gasvolumen zu verwenden, um den Aufwand bei der Abtrennung des Gases und dessen Entstaubung möglichst gering zu halten. Daneben war es Aufgabe, eine Vorrichtung bereitzustellen, mit der die Abkühlung einer Mischung bestehend aus einem feinteiligen, pulverförmigen Feststoff und einem Gas in einfacher und effizienter Weise bewerkstelligt werden kann.
Daneben war es Aufgabe, in Schüttgutverpackungen befindliche feinteilige, pulverförmige Feststoffe mit einem gegenüber Luft geringeren Anteil an Sauerstoff in der Gasphase zwischen den Feststoffpartikeln herzustellen.

Diese Aufgabe wird durch ein Verfahren und eine Vorrichtung gemäß den Ansprüchen 1 und 18 gelöst.
Das erfindungsgemäße Verfahren umfasst eine direkte Kühlung von feinteiligen, pulverförmigen Feststoffen durch Zugabe eines Kühlmediums und im Anschluss daran eine Abfüllung des Mahlguts in Schüttgutverpackungen, wobei das Kühlmedium entweder aus einem oder mehreren verschiedenen niedrig siedenden, kondensierten Gasen besteht oder aus einem kalten Gas oder Gasgemisch besteht, welches mit Hilfe eines oder mehrerer verschiedener niedrig siedender, kondensierter Gase erzeugt wurde, oder wobei das Kühlmedium aus einem kalten Gas oder Gasgemisch besteht, welches mit Hilfe eines oder mehrerer verschiedener niedrig siedender, kondensierter Gase vorgekühlt wurde. Von besonderer Bedeutung ist dieses Verfahren für die Kühlung und anschließende Abfüllung von feinteiligen, pulverförmigen Feststoffen in Schüttgutverpackungen, wie z.B. handelsübliche Papiersäcke, Kunststoffsäcke, Beutel, Fässer oder andere Kleingebinde aus unterschiedlichen Materialien. Auch bei der Befüllung von Silofahrzeugen kann das Verfahren von Vorteil sein.
Als Kühlmedium eignen sich alle Verbindungen, welche in Bezug auf die betreffenden feinteiligen, pulverförmigen Feststoffe ein inertes Verhalten aufweisen. Dies können beispielsweise E-delgase, Kohlendioxid, Stickstoff, Sauerstoff oder Mischungen der genannten Stoffe (z.B. Luft) sein.
Bevorzugt wird das für die direkte Kühlung verwendete Kühlmedium durch Verdampfen von niedrig siedenden, kondensierten Gasen erhalten. Besonders eignen sich flüssiger Stickstoff, flüssige Luft oder flüssiges Kohlendioxid. Auch festes Kohlendioxid eignet sich, besonders wenn es in feinverteilter Form vorliegt.
Das für die direkte Kühlung verwendete Kühlmedium weist dabei vorzugsweise eine Temperatur von weniger als 0°C, bevorzugt weniger als -20°C, besonders bevorzugt weniger als -40°C, auf, um einen signifikanten Abkühleffekt zu bewirken.

Die angestrebte Temperatur für die zu kühlenden feinteiligen, pulverförmigen Feststoffe bzw. die zu kühlende feststofthaltige Mischung hängt naturgemäß von der Art der Feststoffe und den Qualitätsanforderungen an diese ab. Bevorzugt wird Art und Menge des Kühlmediums so gewählt, dass die zu kühlenden feinteiligen, pulverförmigen Feststoffe um mindestens 20°C, bevorzugt um mindestens 50°C abgekühlt werden. Bevorzugt wird eine Abkühlung durch die direkte Kühlung auf maximal 100°C, besonders bevorzugt auf maximal 70°C.

Bevorzugt enthält das für die direkte Kühlung verwendete Kühlmedium weniger als 0,0001 Massenanteile Wasser. Auf diese Weise kann der Taupunkt der Feststoff-Gas-Mischung abgesenkt werden, was in einer verminderten Neigung der Feststoffe zur Ausbildung von Agglomeraten niederschlägt. Beispielsweise kann durch Verwendung von flüssigem Stickstoff mit seinem extrem geringen Gehalt an Wasser der Taupunkt in der Feststoffschüttung vorteilhaft abgesenkt werden.

Die Kühlung der feinteiligen, pulverförmigen Feststoffe kann prinzipiell an verschiedenen Stellen des Herstell- oder Verarbeitungsprozesses erfolgen, beispielsweise direkt hinter einer thermischen Behandlung der pulverförmigen Feststoffe, in Förderleitungen oder unmittelbar vor der Abfüllung in Schüttgutverpackungen.

Besonders zweckmäßig ist das erfindungsgemäße Verfahren, wenn die feinteiligen, pulverförmigen Feststoffe aufgrund verfahrenstechnischer oder logistischer Bedingungen bei hohen Temperaturen erzeugt oder verarbeitet werden und die Temperatur nur unzureichend durch Konvektionskühlung oder Kühlung mit Luft abgesenkt werden kann, so dass eine herkömmliche Abfüllung in Schüttgutverpackungen erhebliche Probleme mit sich bringt.

Beispiele für Prozesse, bei denen sich die erfindungsgemäße Kühlung vorteilhaft auswirken kann:
- direktes Kühlen und Abfüllen von feinteiligen, pulverförmigen Feststoffen im Anschluss an eine thermische Trocknung und gegebenenfalls eine Mahlung
- direktes Kühlen und Abfüllen von feinteiligen, pulverförmigen Feststoffen im Anschluss an eine Kalzinierung und gegebenenfalls eine Mahlung
- direktes Kühlen und Abfüllen von feinteiligen, pulverförmigen Feststoffen im Anschluss an einen pyrolytischen Herstellungsprozess oder einen Verbrennungsprozess
- direktes Kühlen und Abfüllen von feinteiligen, pulverförmigen Feststoffen im Anschluss an eine Dampfstrahlmahlung

Es hat sich gezeigt, dass bei feinteiligen pulverförmigen Feststoffen mit einer mittleren Teilchengröße von <50 µm, bevorzugt <20 µm, insbesondere aber bei sehr feinteiligen pulverförmigen Feststoffen mit einer mittleren Teilchengröße von <5 µm, besonders bevorzugt <1 µm, die rheologischen Eigenschaften bzw, die Handhabungseigenschaften deutlich von deren Temperatur abhängen. So ist beispielsweise das Schüttgewicht von feinteiligen, pulverförmigen Feststoffen, welche bei niedriger Temperatur in die üblicherweise verwendeten Verpackungen wie Säcke, Fässer, Big Bags oder Silos abgefüllt werden, signifikant höher im Vergleich zum gleichen Produkt, welches bei höherer Temperatur in diese Verpackungen abgefüllt werden.

Bei den zu kühlenden und abzufüllenden feinteiligen, pulverförmigen Feststoffen kann es sich beispielsweise um Titandioxid, Eisenoxid, Chromoxid, Lichtechtpigmente, Buntpigmente, Metallpigmente, Magnetpigmente oder Ruße handeln.

Auch kann es sich bei den abzufüllenden feinteiligen, pulverförmigen Feststoffen um temperaturempfindliche Verbindungen oder mit temperaturempfindlichen Verbindungen beschichtete Feststoffe handeln.

Die erfindungsgemäße direkte Kühlung durch ein Kühlmedium kann beispielsweise dadurch erfolgen, dass das Kühlmedium in eine Förderleitung zur pneumatischen der feinteiligen, pulverförmigen Feststoffe hinzudosiert wird. Es kann auch vorteilhaft sein, das Kühlmedium an mehreren verschiedenen Stellen zuzudosieren, um besonders starke Temperaturabsenkungen zu erzielen. Auf diese Weise kann das Kühlmedium gegebenenfalls auch einen wesentlichen Beitrag zur pneumatischen Förderung leisten.
Die Eindüsung des Kühlmediums in eine Förderleitung kann sowohl in Strömungsrichtung als auch gegen die Strömungsrichtung erfolgen, je nachdem, ob eine starke oder geringe Verwirbelung des Kühlmediums angestrebt wird.
Die Vorrichtung zur erfindungsgemäßen direkten Kühlung besteht aus einem Vorratsbehälter für niedrig siedende kondensierte Gase, einer isolierten Verbindungsleitung zwischen Vorratsbehälter und Förderleitung zur pneumatischen Förderung der feinteiligen, pulverförmigen Feststoffe, einer Düse zur Einbringung der niedrig siedenden kondensierten Gase in die Förderleitung und einer Steuer- und Regeleinrichtung.

Dieses Verfahren der erfindungsgemäßen direkten Kühlung hat gegenüber dem Verfahren einer indirekten Kühlung über Kontaktflächen den Vorteil, dass keine großen Kontaktflächen zur Wärmeübetragung benötigt werden. Daneben erfolgt die Abkühlung wesentlich schneller als bei einer indirekten Kühlung, was sich insbesondere dann besonders vorteilhaft auswirkt, wenn es sich um ein temperaturempfindliches Mahlgut handelt oder wenn große Temperaturabsenkungen in kurzer Zeit angestrebt werden.
Demgegenüber besteht bei der indirekten Kühlung aufgrund von vergleichsweise großen Temperaturgradienten im zu kühlenden Material das Risiko von lokaler Kondensation, insbesondere im Bereich der Kühlflächen.

Der Vorteil des erfindungsgemäßen Verfahrens gegenüber einer Kühlung mit großen Mengen an Luft von Umgebungstemperatur besteht zum einen darin, dass durch die direkte Kühlung bei Verwendung von niedrig siedenden kondensierten Gasen aufgrund deren Verdampfungsenthalpie ein wesentlich schnellerer und stärkerer Abkühleffekt erreicht werden kann.

Zum anderen wird beim erfindungsgemäßen Verfahren eine geringeres Volumen an Gasphase benötigt, was die Abtrennung der Gasphase von den feinteiligen, pulverförmigen Feststoffen vor bzw. bei der Befüllung von Schüttgutverpackungen wesentlich vereinfacht. Außerdem verringert sich der Aufwand für die Entstaubung des Gases erheblich.
Daneben wird eine Kontaminierung der feinteiligen, pulverförmigen Feststoffe durch Feuchtigkeit, Staub, Kohlendioxid, Schwefel- oder Stickoxide, Ölspuren oder andere Verunreinigungen aus der Luft verringert oder vermieden. Insbesondere bei einer basischen Oberfläche der feinteiligen, pulverförmigen Feststoffe (z.B. nach einer chemischen Behandlung mit entsprechenden Verbindungen) kann bei Verwendung großer Mengen an Luft eine unerwünschte Neutralisierung der Oberfläche durch die sauren Komponenten der Luft erfolgen.
Schließlich wird durch die Aufnahmekapazität für Feuchtigkeit des in der Regel sehr trockenen Kühlmediums die Restfeuchte der feinteiligen, pulverförmigen Feststoffe reduziert.

Obwohl die kryogene Kühlung von feinteiligen, pulverförmigen Feststoffen mittels niedrig siedender, kondensierter Gase durch verhältnismäßig hohe Kosten für das Kühlmedium gekennzeichnet ist, wird dieser Effekt bei näherer Betrachtung überraschenderweise durch eine ganze Reihe von Vorteilen dieser Verfahrensweise überkompensiert. Beispielsweise können sich durch die niedrigere Temperatur des Feststoff-Gas-Gemisches und durch den geringeren spezifischen Gasanteil (bezogen auf den Feststoff) folgende Vorteile ergeben:
- Weniger Verschleiß von temperaturempfindlichen Anlageteilen wie z.B. Gummidichtungen
- Weniger Beschädigungen von temperaturempfindlichen Schüttgutverpackungen wie z.B. Papiersäcken, Kunststoffsäcken wegen niedrigerer Temperatur der abzufüllenden feinteiligen, pulverförmigen Feststoffe
- Wegen geringerer thermischer Belastung Möglichkeit zur Verwendung preisgünstigerer Verpackungen
- höheres Schüttgewicht der feinteiligen, pulverförmigen Feststoffe zum Zeitpunkt der Abfüllung
- besseres Entlüftungsverhalten bei der Befüllung von Schüttgutverpackungen und Silofahrzeugen aufgrund der niedrigeren Viskosität der Gasphase
- höhere Füllmenge von Schüttgutverpackungen und Silofahrzeugen
- schnellere Befüllung von Schüttgutverpackungen und Silofahrzeugen
- weniger Beschädigungen von Schüttgutverpackungen (z.B. Papiersäcken) durch zu hohes Füllvolumen
- geringere Staubneigung bei der Abfüllung der feinteiligen, pulverförmigen Feststoffe in Schüttgutverpackungen
- geringeres Gasvolumen bei pneumatischer Förderung bzw. Kühlung; deshalb kleinere Filterfläche zur Entstaubung des Gases bzw. höhere Abfüllkapazität bei konstanter Filterfläche
- optisch ausprechenderes Erscheinungsbild, beispielsweise von Säcken und Paletten
- Geringere Feuchtigkeit im Produkt durch Aufnahmekapazität des Kühlmediums
- Weniger Kondensation innerhalb von Paletten mit Schrumpfhaube
- Verbesserung der Arbeitssicherheit durch die niedrigere Temperatur der abgepackten feinteiligen, pulverförmigen Feststoffe bei der weiteren Handhabung (z.B. Verladung oder Transport)

Das erfindungsgemäße Verfahren zur Kühlung von feinteiligen, pulverförmigen Feststoffen hat nicht nur einen geringeren Anteil an Fehlchargen, wie z.B. geplatzte Säcke, zur Folge, sondern weist als weitere Vorteile auch einen zuverlässigeren Betrieb, eine erhöhte Kapazität von Abfüllvorrichtungen sowie eine geringere Staubneigung auf und hat ein ansprechenderes optisches Erscheinungsbild von einzelnen Säcken oder Paletten zur Folge.

Besonders eignet sich das erfindungsgemäße Verfahren zur direkten Kühlung von anorganischen oder organischen Pigmenten und deren anschließende Abfüllung in Schüttgutverpackungen, weil an diese Pigmente oftmals besonders hohe Anforderungen bezüglich Dispergierung bzw. Feinheit gestellt werden und gleichzeitig die rheologischen Eigenschaften bzw. die Handhabung der gemahlenen Pigmente von besonderer Bedeutung sind.
Die spezifischen Vorteile des erfindungsgemäßen Verfahrens im Falle der Anwendung auf Pigmente bestehen darin, dass wesentliche Anforderungen an die Pigmente wie gute Dispergierbarkeit, gute optische Eigenschaften und gute Handhabung der gemahlenen Pigmente bei der Abfüllung in Schüttgutverpackungen gleichzeitig erfüllt werden können. Gerade die rheologischen Eigenschaften bzw. die Handhabungseigenschaften von Pigmenten hängen stark von deren Temperatur ab. So ist beispielsweise das Schüttgewicht von Pigmenten, welche bei niedriger Temperatur in die üblicherweise verwendeten Verpackungen wie Säcke, Fässer, Big Bags oder Silos abgefüllt werden, signifikant höher im Vergleich zum gleichen Produkt, welches bei höherer Temperatur in diese Verpackungen abgefüllt werden.

Bei einer Dampfstrahlmahlung von Pigmenten kann die Kühlung des Mahlgutes beispielsweise direkt hinter der Dampfstrahlmühle, nach einer Abscheidevorrichtung wie z.B. einem Staubfilter oder einem Zyklon in Förderleitungen oder unmittelbar vor der Abfüllung in Schüttgutverpackungen. Es kann vorteilhaft sein, wenn das Kühlmedium erst dann zugegeben wird, wenn der Wasserdampfpartialdruck der Gasphase des Mahlguts beispielsweise aufgrund von teilweisem Austausch oder Verdünnen des Wasserdampfs durch Luft bereits hinreichend niedrige Werte aufweist, um ein Unterschreiten des Taupunktes infolge der direkten Kühlung zu vermeiden.
Bevorzugt wird nach der Dampfstrahlmahlung ein Teil der wasserdampfhaltigen Gasphase zunächst von den gemahlenen Pigmenten abgetrennt und anschließend die gemahlenen Pigmente durch direkte Kühlung mit Hilfe eines Kühlmediums abgekühlt. Diese Abtrennung eines Teils der wasserdampfhaltigen Gasphase erfolgt beispielsweise mit Hilfe eines Zyklons und/oder eines Staubfilters.

Das erfindungsgemäße Verfahren eignet sich in besonderer Weise für Titandioxidpigmente wegen des starken Einflusses der Temperatur auf Parameter wie das Schüttgewicht bei der Abfüllung. Insbesondere für solche Titandioxidqualitäten, welche zur Einfärbung von Kunststoffen oder für Dispersionfarben verwendet werden und aufgrund ihrer spezifischen Zusammensetzung ein besonders niedriges Schüttgewicht aufweisen, erweist sich das erfindungsgemäße Verfahren als besonders vorteilhaft. Auf diese Weise kann auf alternative Verfahren wie z.B. eine Granulierung oder Pelletierung verzichtet werden.
Auch kann sich bei organisch beschichteten Pigmenten durch hohe Temperaturen leicht ein nachteiliger Einfluss auf die Zersetzungsneigung organischer Additive auf der Pigmentoberfläche (Mahlhilfsmittel) ergeben, was sich insbesondere auf den Farbton nachteilig auswirken kann. Dies wird durch das erfindungsgemäße Verfahren ebenfalls vermieden.
Besonders vorteilhaft ist das erfindungsgemäße Verfahren, wenn mehrere Dampfstrahlmühlen parallel betrieben werden und der auf diese Weise erzielte hohe Durchsatz an Pigment nur unzureichend durch Konvektionskühlung oder andere herkömmliche Verfahren in seiner Temperatur abgesenkt werden kann.

Das erfindungsgemäße Verfahren eignet sich auch gut für Eisenoxidpigmente. Die Vorteile sind hier zum einen ähnlich wie bei Titandioxidpigmenten. Bei oxidierbaren Eisenoxidpigmenten, z.B. Eisenoxidpigmente in der Magnetitmodifikation, kommt jedoch noch hinzu, dass durch Verwendung von nicht-oxidierenden Gasen wie z.B. CO₂ oder N₂ als Kühlmedium die Oxidationsneigung im Verlauf der Verarbeitung und Lagerung durch die teilweise oder weitgehende Verdrängung von Luftsauerstoff durch das Kühlmedium unterbunden werden kann. Zusätzlich wird durch die niedrigen Temperaturen, wie sie durch das erfindungsgemäße Verfahren bei der Abfüllung in Säcke erzielt werden, die Reaktivität dieser Pigmente gegenüber Restanteilen von Luftsauerstoff deutlich verringert.
Mit Hilfe des erfindungsgemäßen Verfahrens ist es somit in manchen Fällen möglich, auch solche Pigmente, welche üblicherweise nicht mittels Dampfstrahlmühlen gemahlen werden können, mit dieser ausgesprochen wirkungsvollen Mahltechnik zu zerkleinern.

Die erfindungsgemäß erhaltenen in Schüttgutverpackungen befindlichen Materialien weisen in der Gasphase zwischen den Feststoffpartikeln bevorzugt weniger als 20 Gew.-% Sauerstoff, besonders bevorzugt weniger als 15 Gew.-% Sauerstoff bzw. ein Massenverhältnis von Stickstoff zu Sauerstoff von mehr als 4, bevorzugt von mehr als 5,7 auf

Da feinteilige, pulverförmige Feststoffe je nach spezifischer Zusammensetzung ein deutlich unterschiedliches rheologisches Verhalten zeigen können, kann durch geeignete Wahl der Zugabe des Kühlmediums und damit der Temperatur eine gezielte Beeinflussung der Fördereigenschaften vorgenommen werden. Je nach Art des Feststoffss kann eine Kühlung vor der pneumatischen oder mechanischen Förderung oder erst nach der Förderung günstiger sein. Auch kann eine Kühlung erst unmittelbar vor der Abfüllung in Schüttgutverpackungen vorteilhaft sein.

Eine bevorzugte Ausgestaltung der Erfindung besteht darin, die für die pneumatische Förderung verwendete Förderluft abzukühlen und mit dieser kalten Förderluft als Kühlmedium eine direkte Kühlung der feinteiligen, pulverförmigen Feststoffe vorzunehmen. Die Temperatur der Förderluft kann hierbei derart gewählt werden, dass nach Mischung mit den zu kühlenden feinteiligen, pulverförmigen Feststoffen die gewünschte Endtemperatur erreicht wird. Die Abkühlung der Förderluft kann beispielsweise mit Hilfe eines Wärmetauschers oder durch direkte Einspeisung von niedrig siedenden kondensierten Gasen oder festem Kohlendioxid in die Förderluft erfolgen. Die Kühlung der Förderluft mittels Wärmetauscher kann dabei nach beliebigen dem Fachmann geläufigen Methoden erfolgen. Besonders vorteilhaft bei dieser Verfahrensweise ist, dass die indirekte Kühlung hier an einem feststofffreien Gas erfolgt und das Feststoff-Gas-Gemisch direkt gekühlt wird.

Die Kühlung der für die pneumatische Förderung verwendeten Förderluft vor dem Kontakt mit den zu kühlenden feinteiligen, pulverförmigen Feststoffen kann verfahrenstechnisch günstiger sein als die Kühlung eines feststoffhaltigen Gases wie es nach Vermischung der Förderluft mit den zu fördernden feinteiligen pulverförmigen Feststoffen entsteht.

Es ist auch möglich, die beschriebenen Varianten miteinander zu kombinieren. Beispielsweise kann sowohl eine Kühlung der Förderluft (direkt oder indirekt) und mit dieser eine direkte Kühlung des Feststoff-Gas-Gernischs erfolgen als auch zusätzlich eine direkte Kühlung des Feststoff-Gas-Gemischs (z.B. mit niedrig siedenden kondensierten Gasen) vorgenommen werden.

Unabhängig von Art des Kühlmediums ist beim erfindungsgemäßen Verfahren der direkten Kühlung von feinteiligen, pulverförmigen Feststoffen die Möglichkeit der gezielten Steuerung und Regelung des Gesamtprozesses hinsichtlich temperaturabhängiger Parameter besonders vorteilhaft. Beispielsweise kann durch Regelung der Zugabemenge oder -temperatur des Kühlmediums produktabhängig eine optimale und konstante Temperatur der feinteiligen, pulverförmigen Feststoffen eingestellt und damit z.B. die Fördereigenschaften oder die Eigenschaften bei Befüllung von Schüttgutverpackungen gezielt gesteuert, optimiert und konstant gehalten werden.

Die Abfüllung der feinteiligen, pulverförmigen Feststoffen in Papier- oder Kunststoffsäcke erfolgt üblicherweise über ein Abfüllsilo mit Hilfe von Feststofffördersystemen. Bei Temperaturen von 60°C und mehr scheidet die Verwendung von preisgünstigen Kunststoffsäcken (z.B. aus Polyethylen oder Polypropylen) in der Regel aus. Lediglich spezielle und teure Kunststoffsäcke mit einer hohen Temperaturstabilität können hierfür verwendet werden.
Mit Hilfe des erfindungsgemäßen Verfahrens ist es jedoch möglich, anstelle dieser teuren Kunststoffsäcke preisgünstige Polyethylen- oder Poplypropylensäcke zu verwenden. Hierfür ist in der Regel eine Kühlung auf Temperaturen im Bereich von 60°C oder weniger notwendig.
Auch die Verwendung von preisgünstigeren Papiersäcken mit einer geringeren Stabilität oder von Papiersäcken mit einer Kunststoff-Einlage oder Kunststoffkomponenten im Verschließbereich wird mit Hilfe des erfindungsgemäßen Verfahrens möglich.
Ebenfalls ermöglicht das erfindungsgemäße Verfahren die Verwendung anderer Packmittel, die gegenüber den nach dem Stand der Technik auftretenden Temperaturen nicht beständig sind, z.B. Big Bags auf Basis von Kunststoffen mit geringer thermischer Belastbarkeit oder andere temperaturempfindliche Kunststoffverpackungen.

### Beispiel 1:

Ein nach dem Stand der Technik hergestelltes nachbehandeltes und getrocknetes Titandioxidpigment wird in einer Dampfstrahknühle mikronisiert.

Das Produkt-Dampf-Verhältnis beträgt 1:2,2 Gewichtsanteile. Die Temperatur des Dampfs beträgt 260°C. An Förderluft werden zusammen mit dem zu mahlenden Pigment ca. 100 m³ pro Tonne TiO₂ in die Dampfstrahlmühle eingebracht. Die Temperatur des Pigment-Gas-Gemisches nach der Dampfstrahlmahlung beträgt ca. 230°C; nach Abscheidung des Pigments von der Gasphase mittels eines Zyklons liegt die Temperatur der wasserdampfhaltigen Pigmentschüttung bei ca. 180°C. Der Wassergehalt der Gasphase beträgt ca. 95 Gew.-%, der Wassergehalt der Gasphase bezogen auf TiO₂ beträgt ca. 0,2 Gew.-% bei einer Schüttdichte des TiO₂ von 0,5 g/cm³. Nach Zwischenlagerung in einem Silo wird die wasserdampfhaltige Pigmentschüttung pneumatisch zur Absackmaschine gefördert. Die Menge an getrockneter Förderluft beträgt 75 m³ pro Tonne TiO₂. In die Förderleitung wird über eine Düse 97 l flüssiger Stickstoff pro Tonne TiO₂ eingebracht. Die Temperatur des Titandioxid-Gas-Gemisches wird hierdurch von 110°C auf 60°C abgesenkt. Der Wassergehalt der Gasphase beträgt danach ca. 1 Gew.-%, der Wassergehalt der Gasphase bezogen auf TiO₂ beträgt ca. 0,2%.
Die Abtrennung der Gasphase vom TiO₂ erfolgt im Abfüllsilo, aus dem die Säcke befüllt werden. Die Temperatur der gashaltigen Pigmentschüttung zum Zeitpunkt der Abfüllung in Papiersäcke beträgt 60°C. Die Zusammensetzung der Gasphase zwischen den TiO₂-Partikeln in den Papiersäcken ist: 87 Gew.-% N₂, 12 Gew.-% O₂. Der Wassergehalt der Gasphase bezogen auf TiO₂ errechnet sich zu weniger als 0,01 Gew.-%. Unabhängig davon weist das TiO₂ etwa 0,3 Gew.-% adsorbiertes Wasser auf.

Das Abfüll- und Entlüftungsverhalten bei der Befüllung der Säcke ist aufgrund des hohen Schüttgewichts der gashaltigen Pigmentschüttung gut. Als Folge hiervon zeigen die Paletten ein optisch ansprechendes Erscheinungsbild.

### Beispiel 2:

Ein nach dem Stand der Technik hergestelltes nachbehandeltes und getrocknetes Titandioxidpigment für die Einfärbung von Kunststoffen wird unter Zusatz von 1 Gew.-% eines Silikonöls in einer Dampfstrahlmühle mikronisiert. Der weitere Ablauf des Verfahrens bis vor die Abfüllung in Säcke erfolgt analog zu Beispiel 1.
Im Unterschied zu Beispiel 1 erfolgt die Abfüllung jedoch in handelsübliche Polypropylensäcke. Aufgrund der niedrigen Temperatur der gashaltigen Pigmentschüttung (60°C) zum Zeitpunkt der Abfüllung in die Polypropylensäcke treten keinerlei Beschädigungen der Säcke auf.
Das Abfüll und Entlüftungsverhalten bei der Befüllung der Säcke ist aufgrund des vergleichsweise hohen Schüttgewichts der gashaltigen Pigmentschüttung gut. Als Folge hiervon zeigen die Paletten ein optisch ansprechendes Erscheinungsbild.
Das Pigment ist besonders geeignet zur Einfärbung von Kunststoffen. Es ist möglich, das Pigment zusammen mit der Verpackung direkt in dem Verarbeitungsprozess zu verwenden.

### Beispiel 3:

Ein nach dem Stand der Technik hergestelltes und mit insgesamt 15 Gew.-% an SiO₂ und Al₂O₃ (bezogen auf TiO₂) nachbehandeltes und getrocknetes Titandioxidpigment wird in einer Dampfstrahlmühle mikronisiert. Der weitere Ablauf des Verfahrens erfolgt analog zu Beispiel 1.
Das Abfüll- und Entlüftungsverhalten bei der Befüllung der Säcke ist aufgrund des vergleichsweise hohen Schüttgewichts der gashaltigen Pigmentschüttung gut. Als Folge hiervon zeigen die Paletten ein optisch ansprechendes Erscheinungsbild. Das Pigment ist besonders geeignet zur Herstellung von Dispersionsfarben.

### Beispiel 4:

Ein nach dem Stand der Technik durch Kalzinieren aus Magnetit hergestelltes Eisenoxidrotpigment (Fe₂O₃) wird in einer Dampfstrahlmühle mikronisiert. Das Produkt-Dampf-Verhältnis beträgt 1:2 Gewichtsanteile. Die Temperatur des Dampfs beträgt 260°C. Der weitere Ablauf des Verfahrens erfolgt analog zu Beispiel 1.
Das Abfüll- und Entlüftungsverhalten bei der Befüllung der Säcke ist aufgrund des hohen Schüttgewichts der gashaltigen Pigmentschüttung gut. Auch ist es möglich aufgrund der niedrigen Temperatur (60°C) der gashaltigen Pigmentschüttung, das Produkt in herkömmliche Polyethylen- oder Poplypropylensäcke abzufüllen.

### Beispiel 5:

Ein nach dem Stand der Technik durch Kalzinieren hergestelltes Nickelrutil-Gelbpigment wird in einer Raymondmühle gemahlen. Nach Zwischenlagerung in einem Silo wird die Pigmentschüttung pneumatisch zur Absackmaschine gefördert. In die Förderleitung wird über eine Düse so viel flüssiger Stickstoff eingebracht, dass die Temperatur der gashaltigen Pigmentschüttung zum Zeitpunkt der Abfüllung in Säcke 60°C beträgt.
Das Abfüll- und Entlüftungsverhalten bei der Befüllung der Säcke ist aufgrund des hohen Schüttgewichts der gashaltigen Pigmentschüttung gut. Auch ist es möglich aufgrund der niedrigen Temperatur (60°C) der gashaltigen Pigmentschüttung, das Produkt in herkömmliche Polyethylen- oder Poplypropylensäcke abzufüllen.

### Beispiel 6:

Ein nach dem Stand der Technik hergestellter Furnace-Ruß wird über ein Staubfilter von der Gasphase abgeschieden und in einem Silo zwischengelagert. Von dort wird der Ruß pneumatisch zur Absackmaschine gefördert. In die Förderleitung wird über eine Düse so viel flüssiger Stickstoff eingebracht, dass die Temperatur der gashaltigen Rußschüttung zum Zeitpunkt der Abfüllung in die Säcke 60°C beträgt.
Das Abfüll- und EntlüRungsverhalten bei der Befüllung der Säcke ist aufgrund des hohen Schüttgewichts der gashaltigen Rußschüttung gut. Auch ist es möglich aufgrund der niedrigen Temperatur (60°C) der gashaltigen Rußschüttung, das Produkt in herkömmliche Polyethylen- oder Poplypropylensäcke abzufüllen.

### Beispiel 7:

Ein nach dem Stand der Technik hergestelltes Magnetitpigment (Fe₃O₄) wird in einer Dampfstrahlmühle gemahlen. Nach weitgehender Abscheidung der Gasphase mit Hilfe eines Zyklons oder Staubfilters und Zwischenlagerung in einem Silo wird die Pigmentschüttung mit Stickstoff als Fördergas pneumatisch zur Absackmaschine gefördert. In die Förderleitung wird über eine Düse so viel flüssiger Stickstoff eingebracht, dass die Temperatur der gashaltigen Pigmentschüttung zum Zeitpunkt der Abfüllung in Säcke maximal 30°C beträgt.
Das Abfüll- und Entlüftungsverhalten bei der Befüllung der Säcke ist aufgrund des hohen Schüttgewichts der gashaltigen Pigmentschüttung gut. Aufgrund der niedrigen Abfülltemperatur ist die Reaktivität gegenüber Restanteilen von Sauerstoff unterbunden.
Der dampfstrahlgemahlene Magnetit weist eine ausgezeichnete Feinteiligkeit und Dispergierbarkeit auf.

### Beispiel 8 (Vergleichsbeispiel):

Ein nach dem Stand der Technik hergestelltes nachbehandeltes und getrocknetes Titandioxidpigment wird in einer Dampfstrahlmühle mikronisiert.
Das Produkt-Dampf-Verhältnis beträgt 1:2,2 Gewichtsanteile. Die Temperatur des Dampfs beträgt 260°C. An Förderluft werden zusammen mit dem zu mahlenden Pigment ca. 100 m³ pro Tonne TiO₂ in die Dampfstrahlmühle eingebracht. Die Temperatur des Pigment-Gas-Gemisches nach der Dampfstrahlmahlung beträgt ca. 230°C; nach Abscheidung des Pigments von der Gasphase mittels eines Zyklons liegt die Temperatur der wasserdampfhaltigen Pigmentschüttung bei ca. 180°C. Der Wassergehalt der Gasphase beträgt ca. 95 Gew.-%, der Wassergehalt der Gasphase bezogen auf TiO₂ beträgt ca. 0,2 Gew.-% bei einer Schüttdichte des TiO₂ von 0,5 g/cm³.

Nach Zwischenlagerung in einem Silo wird die wasserdampfhaltige Pigmentschüttung pneumatisch zur Absackmaschine gefördert. Die Menge an Förderluft beträgt 150 m³ pro Tonne TiO₂. Der Wassergehalt der Gasphase beträgt danach ca. 1 Gew.-%, der Wassergehalt der Gasphase bezogen auf TiO₂ beträgt ca. 0,2%.
Die Abtrennung der Gasphase vom TiO₂ erfolgt im Abfüllsilo, aus dem die Säcke befüllt werden. Die Temperatur der gashaltigen Pigmentschüttung zum Zeitpunkt der Abfüllung in Papiersäcke beträgt 110°C. Die Zusammensetzung der Gasphase zwischen den TiO₂-Partikeln in den Papiersäcken ist: 76 Gew.-% N₂, 23 Gew.-% O₂.
Das Abfüll- und Entlüftungsverhalten bei der Befüllung der Säcke ist aufgrund des niedrigen Schüttgewichts der gashaltigen Pigmentschüttung schlecht. Als Folge hiervon zeigen die Paletten ein optisch wenig ansprechendes Erscheinungsbild.
Eine Abfüllung in handelsübliche Polyethylen- oder Polypropylensäcke ist aufgrund der hohen Temperatur nicht möglich.

### Beispiel 9 (Vergleichsbeispiel):

Ein nach dem Stand der Technik hergestelltes nachbehandeltes und getrocknetes Titandioxidpigment wird in einer Dampfstrahlmühle mikronisiert.
Das Produkt-Dampf-Verhältnis beträgt 1:2,2 Gewichtsanteile. Die Temperatur des Dampfs beträgt 260°C. An Förderluft werden zusammen mit dem zu mahlenden Pigment ca. 100 m³ pro Tonne TiO₂ in die Dampfstrahlmühle eingebracht. Die Temperatur des Pigment-Gas-Gemisches nach der Dampfstrahlmahlung beträgt ca. 230°C; nach Abscheidung des Pigments von der Gasphase mittels eines Zyklons liegt die Temperatur der wasserdampfhaltigen Pigmentschüttung bei ca. 180°C. Nach kurzer Zwischenlagerung in einem Silo wird die wasserdampfhaltige Pigmentschüttung pneumatisch zur Absackmaschine gefördert. Um eine ausreichende Kühlung des Titandioxids zu erreichen, werden 730 m³ Förderluft pro Tonne TiO₂ verwendet.
Die Abtrennung der Gasphase vom TiO₂ erfolgt im Abfüllsilo, aus dem die Säcke befüllt werden. Die Temperatur der gashaltigen Pigmentschüttung zum Zeitpunkt der Abfüllung in Papiersäcke beträgt 60°C.
Das Abtrennung der Gasphase ist aufgrund der hohen Gasmenge aufwendig. Es kann nur erheblich weniger Titandioxid pro Zeiteinheit gefördert und abgefüllt werden, wenn keine entsprechend vergrößerten Filterflächen zur Entstaubung des Fördergases zur Verfügung gestellt werden.

## Patentansprüche

1. Verfahren zur direkten Kühlung eines feinteiligen, pulverförmigen Feststoffes erhöhter Temperatur durch Zugabe eines Kühlmediums und anschließende Abfüllung in eine Schüttgutverpackung,
**dadurch gekennzeichnet,**
**dass** in eine eine mittlere Teilchengröße von weniger als 50 µm, vorzugsweise weniger als 20 µm, aufweisende Feststoffmenge aus einem anorganischen oder organischen Pigment, insbesondere aus Titandioxid, Eisenoxid, Chromoxid, einem Lichtechtpigment, einem Buntpigment, einem Metallpigment, einem Magnetpigment oder Ruß, oder aus einer temperaturempfindlichen Verbindung oder einem mit einer temperaturempfindlichen Verbindung beschichteten Feststoff
a) entweder ein aus einem oder mehreren verschiedenen niedrig siedenden, kondensierten Gasen bestehendes,
b) oder ein aus einem kalten Gas oder Gasgemisch bestehendes, mit Hilfe eines oder mehrerer verschiedener niedrig siedender, kondensierter Gase erzeugtes
c) oder ein aus einem kalten Gas oder Gasgemisch bestehendes, mit Hilfe eines oder mehrerer verschiedener niedrig siedender, kondensierter Gase vorgekühltes
Kühlmedium eingeleitet wird.

2. Verfahren nach Anspruch 1, **dadurch gekennzeichnet, dass** die feinteiligen, pulverförmige Feststoffe eine mittlere Teilchengröße von weniger als 5 µm, bevorzugt weniger als 1 µm, aufweisen.

3. Verfahren nach Anspruch 1 oder 2, **dadurch gekennzeichnet, dass** die feinteiligen, pulverförmigen Feststoffe vor dem Verfahrensschritt der direkten Kühlung gemahlen werden.

4. Verfahren nach einem der vorhergehenden Ansprüche, **dadurch gekennzeichnet, dass** es sich bei dem feinteiligen, pulverförmigen Feststoff um Pigmente handelt, die zwischen dem Verfahrensschritt der Dampfstrahlmahlung und dem Verfahrensschritt der Abfüllung in Schüttgutverpackungen oder mobile Schüttgutbehälter durch Zugabe des Kühlmediums direkt gekühlt werden.

5. Verfahren nach Anspruch 4, **dadurch gekennzeichnet, dass** von der unmittelbar nach der Dampfstrahlmahlung vorliegenden Mischung von gemahlenem Pigment und wasserdampfhaltiger Gasphase ein Teil der wasserdampfhaltigen Gasphase zunächst von den gemahlenen Pigmenten mit Hilfe eines Zyklon und/oder eines Staubfilters abgetrennt wird und danach die gemahlenen Pigmente durch direkte Kühlung mittels des Kühlmediums abgekühlt werden.

6. Verfahren nach einem der vorhergehenden Ansprüche, **dadurch gekennzeichnet, dass** das für die direkte Kühlung verwendete Kühlmedium eine Temperatur von weniger als 0°C, bevorzugt weniger als -20°C, besonders bevorzugt weniger als -40°C, aufweist.

7. Verfahren nach einem der vorhergehenden Ansprüche, **dadurch gekennzeichnet, dass** die feinteiligen, pulverförmigen Feststoffe zur Abfüllung in Schüttgutverpackungen oder mobile Schüttgutbehälter pneumatisch gefördert werden und das für die pneumatische Förderung verwendete Gas als Kühlmedium für die direkte Kühlung verwendet wird, wobei dieses Gas vor dem Kontakt mit den feinteiligen, pulverförmigen Feststoffen entweder indirekt in einem Wärmetauscher mittels niedrig siedender, kondensierter Gase oder direkt durch Eindüsen eines oder mehrerer verschiedener niedrig siedender, kondensierter Gase abgekühlt wird.

8. Verfahren nach einem der vorhergehenden Ansprüche, **dadurch gekennzeichnet, dass** bei der pneumatischen Förderung der feinteiligen, pulverförmigen Feststoffe das Kühlmedium in die Förderleitung hinzudosiert wird.

9. Verfahren nach einem der vorhergehenden Ansprüche, **dadurch gekennzeichnet, dass** als Kühlmedium gasförmiger Stickstoff oder gasförmiges Kohlendioxid verwendet wird.

10. Verfahren nach einem der vorhergehenden Ansprüche, **dadurch gekennzeichnet, dass** als Kühlmedium flüssiger Stickstoff oder flüssiges oder festes Kohlendioxid verwendet wird.

11. Verfahren nach einem der vorhergehenden Ansprüche, **dadurch gekennzeichnet, dass** der feinteilige, pulverförmige Feststoff innerhalb der kurzen Zeit, welche zum Vermischen mit dem Kühlmedium benötigt wird, um mindestens 20°C, bevorzugt um mindestens 50°C, abgekühlt wird.

12. Verfahren nach einem der vorhergehenden Ansprüche, **dadurch gekennzeichnet, dass** der feinteilige, pulverförmige Feststoff auf maximal 100 °C, bevorzugt auf maximal 70°C, insbesondere auf ≤ 60°C abgekühlt wird.

13. Verfahren nach einem der vorhergehenden Ansprüche, **dadurch gekennzeichnet, dass** das Kühlmedium in das Fördergas für den pneumatischen Transport des feinteiligen, pulverförmigen Feststoffes eingebracht wird, bevor das Fördergas mit dem Feststoff in Kontakt tritt.

14. Verfahren nach einem der vorhergehenden Ansprüche, **dadurch gekennzeichnet, dass** das für die direkte Kühlung verwendete Kühlmedium weniger als 0,0001 Massenanteile Wasser enthält und auf diese Weise der Taupunkt der feststoffhaltigen Gasphase herabgesetzt wird.

15. Verfahren nach einem der vorhergehenden Ansprüche, **dadurch gekennzeichnet, dass** der feinteilige, pulverförmige Feststoff nach erfolgter Kühlung in eine Schüttgutverpackung, insbesondere in Papier- oder Kunststoffsäcke, abgefüllt oder in ein Silofahrzeug abgefüllt wird.

16. Verfahren nach einem der vorhergehenden Ansprüche, **dadurch gekennzeichnet, dass** der Feststoff derart mit dem Kühlmedium beaufschlagt und in eine Schüttgutverpackung abgefüllt wird, dass in der Schüttgutverpackung die Gasphase zwischen den Pigmentpartikeln weniger als 20 Gew.-% Sauerstoff, bevorzugt weniger als 15 Gew.-% Sauerstoff enthält.

17. Verfahren nach einem der vorhergehenden Ansprüche, **dadurch gekennzeichnet, dass** der Feststoff derart mit dem Kühlmedium beaufschlagt und in eine Schüttgutverpackung abgefüllt wird, dass in der Schüttgutverpackung die Gasphase zwischen den Pigmentpartikeln ein Massenverhältnis von Stickstoff zu Sauerstoff von mehr als 4, bevorzugt von mehr als 5,7, enthält.

18. Vorrichtung zur Durchführung des Verfahrens nach einem der vorhergehenden Ansprüche, bei welchem eine direkte Kühlung einer feinteiligen, pulverförmigen Feststoffmenge mit einer Teilchengröße von weniger als 50 µm, vorzugsweise weniger als 20 µm erfolgt, umfassend einen Vorratsbehälter für ein niedrig siedendes kondensiertes Gas, eine von einer Dampfstrahlmühle zu einer Abpackeinrichtung führende Förderleistung zum pneumatischen Fördern einer Feststoffmenge, eine isolierte Verbindungsleitung zwischen dem Vorratsbehälter und der Förderleitung, eine Düse zur Einbringung des niedrig siedenden kondensierten Gases in die Feststoffmenge in der Förderleitung sowie eine Steuer- und Regeleinrichtung.

19. Vorrichtung nach Anspruch 18,
**dadurch gekennzeichnet,**
**dass** der Förderleitung eine das Mahlgut und wasserdempfhaftige Gasphase trennende Abscheidevorrichtung zugeordnet ist.

## Claims

1. A method of directly cooling a finely divided, powdered solid substance at an elevated temperature by addition of a cooling medium, and subsequently filling bulk-material packaging,
**characterised in that**,
into a quantity of a solid substance having an average particle size of less than 50 µm, preferably less than 20 µm, and comprising an inorganic or organic pigment, especially titanium dioxide, iron oxide, chromium oxide, a light-resistant pigment, a coloured pigment, a metallic pigment, a magnetic pigment or carbon black, or a temperature-sensitive compound or a solid substance coated with a temperature-sensitive compound, a cooling medium is introduced which
a) either comprises one or more different low-boiling, condensed gases,
b) or comprises a cold gas or gas mixture and is produced by means of one or more different low-boiling, condensed gases,
c) or comprises a cold gas or gas mixture and is precooled by means of one or more different low-boiling, condensed gases.

2. A method according to claim 1, **characterised in that** the finely divided, powdered solid substances have an average particle size of less than 5 µm, preferably less than 1 µm.

3. A method according to claim 1 or 2, **characterised in that** the finely divided, powdered solid substances are ground before the method step of direct cooling.

4. A method according to any one of the preceding claims, **characterised in that** the finely divided, powdered solid substances are pigments which are directly cooled by addition of the cooling medium between the method step of steam-jet grinding and the method step of filling bulk-material packaging or mobile bulk-material containers.

5. A method according to claim 4, **characterised in that**, of the mixture of ground pigment and water-vapour-containing gas phase present immediately after steam-jet grinding, some of the water-vapour-containing gas phase is first separated from the ground pigments by means of a cyclone and/or a dust filter and thereafter the ground pigments are cooled by direct cooling by means of the cooling medium.

6. A method according to any one of the preceding claims, **characterised in that** the cooling medium used for direct cooling has a temperature of less than 0°C, preferably less than -20°C, especially preferably less than -40°C.

7. A method according to any one of the preceding claims, **characterised in that** the finely divided, powdered solid substances are pneumatically conveyed for discharge into bulk-material packaging or mobile bulk-material containers, and the gas used for pneumatic conveying is used as a cooling medium for direct cooling, wherein this gas, before contact with the finely divided, powdered solid substances, is cooled either indirectly in a heat exchanger by means of low-boiling, condensed gases or directly by injection of one or more different low-boiling, condensed gases.

8. A method according to any one of the preceding claims, **characterised in that** the cooling medium is metered into the conveying line during the process of pneumatically conveying the finely divided, powdered solid substances.

9. A method according to any one of the preceding claims, **characterised in that** gaseous nitrogen or gaseous carbon dioxide is used as a cooling medium.

10. A method according to any one of the preceding claims, **characterised in that** liquid nitrogen or liquid or solid carbon dioxide is used as a cooling medium.

11. A method according to any one of the preceding claims, **characterised in that** the finely divided, powdered solid substance is cooled by at least 20°C, preferably by at least 50°C, within the short time needed to mix with the cooling medium.

12. A method according to any one of the preceding claims, **characterised in that** the finely divided, powdered solid substance is cooled to a maximum of 100°C, preferably a maximum of 70°C, especially ≤ 60°C.

13. A method according to any one of the preceding claims, **characterised in that** the cooling medium is introduced into the conveying gas for pneumatically conveying the finely divided, powdered solid substance before the conveying gas comes into contact with the solid substance.

14. A method according to any one of the preceding claims, **characterised in that** the cooling medium used for direct cooling contains less than 0.0001 parts by weight of water, and in this way the dew point of the solid-substance-containing gas phase is lowered.

15. A method according to any one of the preceding claims, **characterised in that** the finely divided, powdered solid substance is discharged into bulk-material packaging, especially paper or plastic sacks, or into a silo vehicle after cooling has taken place.

16. A method according to any one of the preceding claims, **characterised in that** the solid substance is acted upon by the cooling medium and discharged into bulk-material packaging in such a way that, in the bulk-material packaging, the gas phase between the pigment particles contains less than 20 wt.% oxygen, preferably less than 15 wt.% oxygen.

17. A method according to any one of the preceding claims, **characterised in that** the solid substance is acted upon by the cooling medium and discharged into bulk-material packaging in such a way that, in the bulk-material packaging, the gas phase between the pigment particles has a mass ratio of nitrogen to oxygen of more than 4, preferably more than 5.7.

18. A device for carrying out the method according to any one of the preceding claims, in which a finely divided, powdered quantity of a solid substance with a particle size of less than 50 µm, preferably less than 20 µm, is directly cooled, comprising a storage container for a low-boiling condensed gas, a conveying line leading from a steam-jet mill to a packaging installation and provided for pneumatically conveying a quantity of a solid substance, an insulated connecting line between the storage container and the conveying line, a nozzle for introducing the low-boiling condensed gas into the quantity of solid substance in the conveying line, and a control and regulating means.

19. A device according to claim 18, **characterised in that** a separating device which separates the ground material and the water-vapour-containing gas phase is associated with the conveying line.

## Revendications

1. Procédé de refroidissement direct d'un solide pulvérulent finement divisé de température élevée par adjonction d'un milieu de refroidissement suivi de soutirage dans un emballage vrac, **caractérisé en ce que** dans une quantité de solide présentant une granulométrie moyenne inférieure à 50 µm, préférentiellement inférieure à 20 µm, constitué d'un pigment minéral ou organique, en particulier de dioxyde de titane, oxyde de fer, oxyde de chrome, d'un pigment résistant à la lumière, d'un pigment coloré, d'un pigment métallique, d'un pigment magnétique ou de noir de carbone, ou d'un composé sensible à la température, ou d'un solide enrobé d'un composé sensible à la température, est introduit un milieu de refroidissement :
a) soit constitué d'un ou plusieurs gaz différents condensés à bas point d'ébullition,
b) soit constitué d'un gaz ou d'un mélange de gaz froid produit à l'aide d'un ou plusieurs gaz différents condensés, à bas point d'ébullition,
c) soit constitué d'un gaz ou d'un mélange de gaz froid pré-réfrigéré à l'aide d'un ou plusieurs gaz différents condensés à bas point d'ébullition.

2. Procédé selon la revendication 1, **caractérisé en ce que** les solides pulvérulents finement divisés présentent une granulométrie moyenne inférieure à 5 µm, de préférence inférieure à 1 µm.

3. Procédé selon la revendication 1 ou 2, **caractérisé en ce que** les solides pulvérulents finement divisés sont broyés avant l'étape de refroidissement direct.

4. Procédé selon l'une quelconque des revendications précédentes, **caractérisé en ce que** le solide pulvérulent finement divisés consiste en des pigments qui sont refroidis directement par adjonction du milieu de refroidissement entre l'étape de broyage par jet de vapeur et l'étape de soutirage en emballages vrac ou en récipients mobiles pour vrac.

5. Procédé selon la revendication 4, **caractérisé en ce que** l'on sépare d'abord du mélange de pigments broyés et de phase gazeuse contenant de la vapeur présent immédiatement après le broyage par jet de vapeur une partie de la phase gazeuse contenant de la vapeur d'eau des pigments broyés, à l'aide d'un cyclone et/ou d'un filtre antipoussière puis que l'on refroidit les pigments broyés par refroidissement direct au moyen du milieu de refroidissement.

6. Procédé selon l'une quelconque des revendications précédentes, **caractérisé en ce que** le milieu de refroidissement utilisé pour le refroidissement direct présente une température inférieure à 0°C, de préférence inférieure à -20°C, de manière particulièrement préférée inférieure à -40°C.

7. Procédé selon l'une quelconque des revendications précédentes **caractérisé en ce que** les solides pulvérulents finement divisés destinés au soutirage en emballage vrac ou en récipient mobile pour vrac sont acheminés pneumatiquement, et le gaz utilisé pour l'acheminement pneumatique est utilisé comme milieu de refroidissement pour le refroidissement direct : ce gaz étant refroidi avant le contact avec les solides pulvérulents finement divisés soit indirectement dans un échangeur de chaleur au moyen de gaz condensés à bas point d'ébullition, soit directement par injection d'un ou plusieurs gaz différents condensés à bas point d'ébullition.

8. Procédé selon l'une quelconque des revendications précédentes, **caractérisé en ce que** lors de l'acheminement pneumatique des solides pulvérulents finement divisés, le milieu de refroidissement est ajouté dans la conduite d'acheminement.

9. Procédé selon l'une quelconque des revendications précédentes, **caractérisé en ce que** comme milieu de refroidissement est utilisé de l'azote gazeux ou du dioxyde de carbone gazeux.

10. Procédé selon l'une quelconque des revendications précédentes, **caractérisé en ce que** comme milieu de refroidissement est utilisé de l'azote liquide ou du dioxyde de carbone liquide ou solide.

11. Procédé selon l'une quelconque des revendications précédentes, **caractérisé en ce que** le solide pulvérulent finement divisé est refroidi au minimum à 20°C, de préférence au minimum à 50°C, dans le bref temps nécessaire au mélange avec le milieu de refroidissement.

12. Procédé selon l'une quelconque des revendications précédentes, **caractérisé en ce que** le solide pulvérulent finement divisé est refroidi au maximum à 100°C, de préférence au maximum à 70°C, en particulier à ≤ 60°C.

13. Procédé selon l'une quelconque des revendications précédentes, **caractérisé en ce que** le milieu de refroidissement est introduit dans le gaz d'acheminement pour le transport pneumatique du solide pulvérulent finement divisé avant que le gaz d'acheminement n'entre en contact avec le solide.

14. Procédé selon l'une quelconque des revendications précédentes, **caractérisé en ce que** le milieu de refroidissement utilisé pour le refroidissement direct contient moins de 0,0001 parties en poids d'eau, et que de cette façon le point de condensation de la phase gazeuse contenant le solide est abaissé.

15. Procédé selon l'une quelconque des revendications précédentes, **caractérisé en ce que** le solide pulvérulent finement divisé est soutiré à l'issue du refroidissement dans un emballage vrac, en particulier dans des sacs en papier ou en plastique, ou dans un véhicule container.

16. Procédé selon l'une quelconque des revendications précédentes **caractérisé en ce que** le milieu de refroidissement est introduit dans le solide de telle manière puis soutiré en emballage vrac que dans l'emballage vrac, la phase gazeuse entre les particules de pigment contient moins de 20 % en poids d'oxygène, de préférence moins de 15 % en poids d'oxygène.

17. Procédé selon l'une quelconque des revendications précédentes, **caractérisé en ce que** le milieu de refroidissement est introduit dans le solide de telle manière puis soutiré en emballage vrac que dans l'emballage vrac, la phase gazeuse entre les particules de pigment contient un rapport massique de l'azote à l'oxygène supérieur à 4, de préférence supérieur à 5,7.

18. Dispositif adapté pour la mise en oeuvre du procédé selon l'une quelconque des revendications précédentes, dans lequel a lieu un refroidissement direct d'une quantité d'un solide pulvérulent finement divisé avec une granulométrie inférieure à 50 µm, de préférence inférieure à 20 µm, comprenant un récipient de stockage pour un gaz condensé à bas point d'ébullition, une conduite d'acheminement depuis un broyeur à jet de vapeur jusqu'à un dispositif d'emballage, pour l'acheminement pneumatique d'une quantité de solide, une conduite de liaison isolée entre le récipient de stockage et la conduite d'acheminement, une buse pour l'introduction du gaz condensé à bas point d'ébullition dans le solide dans la conduite d'acheminement ainsi qu'un dispositif de commande et de réglage.

19. Dispositif selon la revendication 18, **caractérisé en ce qu'**à la conduite d'acheminement est associé un dispositif de séparation du broyat et de la phase gazeuse contenant de la vapeur d'eau.
